(19) Europäisches Patentamt
European Patent Office
Office européen des brevets

(11) Publication number: **0 329 555 A1**

(12) **EUROPEAN PATENT APPLICATION**

(21) Application number: **89400431.6**

(22) Date of filing: **16.02.89**

(51) Int. Cl.⁴: **C 08 K 5/37**
C 08 K 5/47, C 08 L 71/04,
C 08 L 77/00
//(C08L71/04,77:00),
(C08L77/00,71:04)

(30) Priority: **17.02.88 US 157499**

(43) Date of publication of application:
**23.08.89 Bulletin 89/34**

(84) Designated Contracting States:
**DE ES FR GB IT NL**

(71) Applicant: **BORG-WARNER CHEMICALS, INC.**
**International Center 5th and Avery Street**
**Parkersburg West Virginia 26102 (US)**

(72) Inventor: **Whalen, David**
**1926 Hamilton Street**
**Parkersburg West Virginia 26101 (US)**

**Jalbert, Ronald L.**
**61 Canterbury Drive**
**Parkersburg West Virginia 26101 (US)**

(74) Representative: **Catherine, Alain**
**General Electric France Service de Propriété Industrielle**
**18 Rue Horace Vernet B.P. 76**
**F-92134 Issy-les-Moulineaux Cédex (FR)**

(54) **Thermally stabilized blends of polyamide and polyphenylene ether.**

(57) Thermally stabilized polymer blend compositions comprise a polyamide resin, a polyphenylene ether resin, and at least one thermal stabilizer compound of the formula

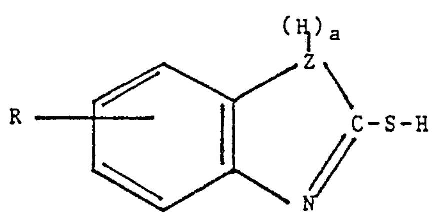

(I)

where Z is selected from nitrogen, sulfur and oxygen, a is a whole number equal to 0 or 1, and R is selected from hydrogen, methyl and ethyl groups. The thermal stabilizer compound is included in an amount sufficient to thermally' stabilize the blend compositions. The blends may further include a compatibilizing agent for the polyamide and the polyphenylene ether and an impact modifier.

EP 0 329 555 A1

**Description**

## THERMALLY STABILIZED BLENDS OF POLYAMIDE AND POLYPHENYLENE ETHER

### FIELD OF THE INVENTION

The present invention relates to thermally stabilized polymer blend compositions which comprise a polyamide resin, a polyphenylene ether resin and a stabilizing compound. The thermal stability of the blend compositions of the invention is exhibited by a substantial retention of the original impact strength, for example, as measured by the high speed puncture properties, after exposure to elevated temperatures for extended periods of time.

### BACKGROUND OF THE INVENTION

Polyphenylene ether resins are known in the art and exhibit a desirable combination of chemical, physical and electrical properties over a temperature range of more than about 650°F, extending from a brittle point of about -275°F to a heat distortion temperature of about 375°F. This combination of properties renders polyphenylene ether resins suitable for a broad range of applications. However, the usefulness of polyphenylene ether resins is limited in some applications as a consequence of processibility, impact resistance and chemical resistance. It is known to modify polyphenylene ether resins with various compounds in order to improve the processability and impact and chemical resistances of the resins. For example, Slama et al disclose in Makromol. Chem., 182, pages 1961-1971 (1981), April 21, 1980, the influence of various stabilizers, metals and peroxides on polyphenylene ether. Slama et al disclose that 2-benzimidazolethiol and 2-benzothiazolethiol act as retardation agents on the thermal-oxidative degradation of polyoxyphenylene. The Holoch U.S. Patent No. 3,379,875 and the Yamanouchi et al U.S. Patent No. 3,700,750 disclose additional modifiers for polyphenylene ether resins.

Alternatively, polyphenylene ether resins have been blended with other resins in order to improve their undesirable properties. For example, the Finholt U.S. Patent No. 3,379,792 discloses a blend of polyphenylene oxide resin and from 0.1 to 25% by weight of a polyamide. The addition of the polyamide is disclosed as improving the flow properties of the polyphenylene oxide. However, Finholt also discloses that when the concentration of the polyamide exceeds 20% by weight, the compatibility between the polyphenylene ether and the polyamide is reduced and phase separation of the resins occurs. It is known that the compatibility of polyphenylene ether and polyamide resins may be improved using various modifying or compatibilizing agents, examples of which are disclosed in the Aycock et al U.S. Patent No. 4,600,741, the Ueno et al U.S. Patent No. 4,315,086, the Gallucci U.S. Patent No. 4,659,763, the Kasahara U.S. Patent No. 4,339,376 and WO 8505372, among others. Even the compatibilized blends exhibit some physical properties which are disadvantageous for their use in various applications and studies are continually being made to improve the overall performance of such blend compositions.

### SUMMARY OF THE INVENTION

Accordingly, it is an object of the present invention to provide thermally stabilized polymer blend compositions. It is a more specific object of the invention to provide thermally stabilized polymer blend compositions which include a polyamide resin and a polyphenylene ether resin. It is a related object of the invention to provide thermally stabilized polymer blend compositions which exhibit thermal stability by substantially retaining their original impact strength after exposure to elevated temperatures for extended periods of time. It is a further object of the invention to provide compatibilized blends of polyamide and polyphenylene ether with improved thermal stability without decreasing the compatibility of the resin components.

These and additional objects are provided by the blend compositions of the invention, which blend compositions comprise a polyamide resin, a polyphenylene ether resin and a thermal stabilizer compound. The thermal stabilizer comprises at least one compound of the formula

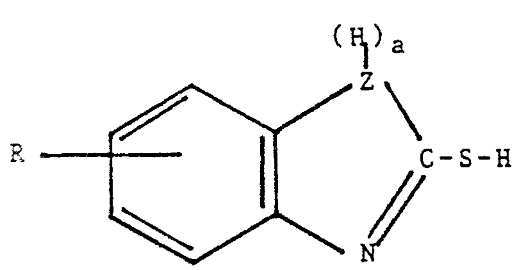

(I)

where Z is selected from nitrogen, sulfur and oxygen, a is a whole number equal to 0 or 1, and R is selected from hydrogen, methyl and ethyl groups. At least one compound of the above formula I is included in an

amount sufficient to thermally stabilize the blend compositions. As a result of the inclusion of at least one thermal stabilizer as defined above, the blend compositions substantially retain their original impact strength after exposure to elevated temperatures for extended periods of time. The blend compositions preferably further include a compatibilizing agent for the polyamide and the polyphenylene ether resins, and an impact modifier. The blend compositions may also include additional resin components, for example, styrene polymers and impact modified styrene polymers.

These and additional objects and advantages will be more fully understood in view of the following detailed description.

DETAILED DESCRIPTION

The thermally stabilized polymer blend compositions of the invention comprise at least three components, namely a polyamide resin, a polyphenylene ether resin, and at least one thermal stabilizer compound of formula I. The inventors of the present application have discovered that the inclusion of at least one thermal stabilizer compound as defined above in the blend compositions provides the compositions with improved stability during and after their exposure to elevated temperatures. The improved thermal stability is particularly exhibited by a substantial retention of impact strength measured, for example, by the high speed puncture properties measured via ASTM D3763-85.

Polyphenylene ether resins adapted for use in the thermoplastic blend compositions of the present invention comprise polymers and copolymers having repeating structural units of the following general formula:

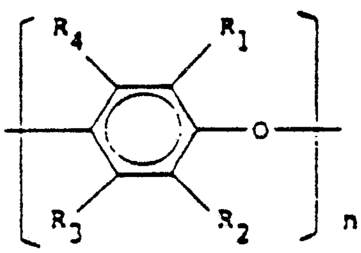

(II)

wherein $R_1$, $R_2$, $R_3$, and $R_4$ each individually represent a monovalent substituent such as hydrogen, halogen, alkyl, aryl, alkoxy and other hydrocarbon groups, with at least one of $R_1$, $R_2$, $R_3$, and $R_4$ not being hydrogen, and n represents the degree of polymerization. Preferably, n is at least 20, and more preferably, n is at least 50.

The polyphenylene ether resins suitable for use in the thermoplastic blend compositions of the present invention are well known in the art and may be prepared by any of a number of processes known in the art from corresponding phenols or reactive derivatives thereof. Examples of suitable polyphenylene ether resins and methods for their production are set forth in the Hay U.S. patents Nos. 3,306,874 and 3,306,875, and in the Kawaki et al U.S. Patent No. 4,011,200, all of which are incorporated herein by reference. The phenylene ether resins (or PPE resins) useful for the purpose of this invention include both the homopolymers prepared by the oxidative coupling of a 2,6-dialkylphenol as disclosed for example in U.S. Patent No. 3,306,874, as well as the copolymers of 2,6-dialkylphenols and 2,3,6-trialkylphenols described in U.S. Patent No. 4,011,200. In general, these resins are prepared by oxidative coupling of a 2,6-dialkylphenol such as 2,6-dimethylphenol or a mixture of a 2,6-dialkylphenol and a 2,3,6-trialkylphenol such as 2,3,6-trimethylphenol. In forming copolymers suitable for the practice of this invention, the proportion of 2,3,6- trialkylphenol will lie in the range of from about 2 to about 50 weight percent based on total polyphenylene ether. However, the preferred copolymers will comprise from about 2 to 20 weight percent, more preferably from about 2 to about 10 weight percent 2,3,6-trialkylphenol, and, correspondingly from about 98 to about 80, more preferably from about 98 to about 90 weight percent 2,6-dialkylphenol. The synthesis of these homopolymers and copolymers by a variety of oxidative coupling processes is well known in the art, and such polymers have become available to the art from commercial sources. Throughout the Specification and Claims the term "polyphenylene ether" includes substituted polyphenylene ether and substituted polyphenylene ether copolymers, and mixtures thereof.

Preferred polyphenylene ether resins adapted for use in the thermoplastic blend compositions of the present invention also include, but are not limited to, the following polymers and copolymers thereof: poly(2,6-dimethyl-1,4-phenlene)ether; poly(2,3,6-trimethyl-1,4-phenylene) ether; poly(2,3,5,6-tetramethyl-1,4-phenylene)ether; poly(2,6-diethyl-1,4-phenylene)ether; poly(2-methyl-6-ethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene)ether; poly(2,6-dibromo-1,4-phenylene)ether; and the like.

Polyamide resins which are particularly adapted for inclusion in the thermoplastic blend compositions of the present invention comprise polymeric condensation products which contain reoccurring aromatic, and/or aliphatic amide groups as integral parts of the main polymeric chain. In general, the polyamide resins have linkages in the main chain of the following formula:

$-\underset{\underset{O}{\|}}{C}-NH-$ (III)

Procedures for preparing polyamides are wellknown in the art, and details of suitable processes are set forth in "Polyamides", Encyclopedia of Polymer Science and Technology, John Wiley and Sons, Inc., Volume 10, pages 487 to 491 (1969).

Preferred polyamides for use in the thermoplastic blend compositions of the present invention include, but are not limited to, polyhexamethylene adipamide (nylon 6:6); polypyrrolidone (nylon 4); polycaprolactam (nylon 6); polyheptolactam (nylon 7); polycaprylactam (nylon 8); polynonanolactam (nylon 9); polyundecanolactam (nylon 11); polydodecanolactam (nylon 12); polyhexamethylene azelaiamide (nylon 6:9); polyhexamethylene sebacamide (nylon 6:10); polyhexamethylene isophthalamide (nylon 6:ip); polymetaxylylene adipamide (nylon MSD:6); polyamide of hexamethylenediamine and n-dodecanedioic acid (nylon 6:12); polyamide of dodecamethylenediamine and n-dodecanedioic acid (nylon 12:12); hexamethylene adipamide/caprolactam (nylon 6:6/6); hexamethylene adipamide/hexamethylene-isophthalimide (nylon 6:6/6ip); hexamethylene adipamide/hexamethylene-terephthalamide (nylon 6:6/6T); trimethylhexamethylene oxamdide/hexamethylene oxamide (nylon trimethyl-6:2/6:2); hexamethylene adipamide/hexamethylene-azelaiamide (nylon 6:6/6:9); and hexamethylene adipamide/hexamethylene-azelaiamide caprolactam (nylon 6:6/6:9/6), and mixtures thereof. Preferred polyamides also include amorphous nylons including those resulting from terepthalic acid and diamine dicyclohexane; terepthalic acid and/or isophthalic acid and trimethyl hexamethylene; bis(4-aminocyclohexyl) methane and/or hexamethylene and terephthalic acid and/or isophthalic acid; 2-amino-6-(3-methyl-4-aminocyclohexyl)-6-methylheptane and terephthalic acid; isophthalic acid and/or adipic acid and 3,3-dimethyl-4,4-diaminodicyclo-hexylmethane and/or hexamethylene diamine, and mixtures thereof.

In accordance with a characterizing feature of the invention, the blend compositions according to the present invention further include at least one thermal stabilizer compound of the formula

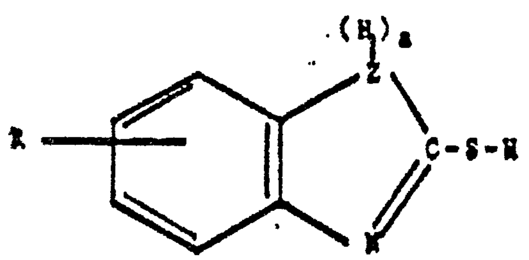

(I)

where Z is selected from nitrogen, sulfur and oxygen, a is a whole number equal to 0 or 1, and R is selected from hydrogen, methyl and ethyl groups, and derivatives thereof. Preferred thermal stabilizer compounds include 2-mercaptobenzothiazole (Z is sulfur), 2-mercaptobenzimidazole (Z is nitrogen), and 2-mercaptobenzoxazole (Z is oxygen), and derivatives thereof, including salts and the like. The preparation of these compounds is well known in the art. For example, 2-mercaptobenzothiazole, also known as 2-benzothiazolethiol, is available commercially or may be prepared by reacting aniline, carbon disulfide and sulfur at elevated pressures and temperature as is known in the art. The preparation of 2-mercaptobenzothiazole is also disclosed in the Kelly U.S. Patent No. 1,631,871, the Weyker et al U.S. Patent No. 2,730,528 and the Szlatinay U.S. Patent No. 3,031,073, all of which are incorporated herein by reference. Similarly, 2-mercaptobenzimidazole, also known as 2-benzimidazolethiol or 1,3-dihydro-2H-benzimidazole-2-thione, is also available commercially or may be prepared from o-phenylenediamine and potassium ethyl xanthate as disclosed by Van Allen et al, Organic Synthesis, Coll. Vol. IV, 569 (1963), which is incorporated herein by reference. Methods for producing 2-mercaptobenzimidazole are also disclosed in U.S. Patent No. 3,235,559, incorporated herein by reference.

At least one compound of formula I is included in the blend compositions in an amount sufficient to thermally stabilize the blend composition. Preferably, at least one compound of formula I is included in an amount sufficient to cause the blend compositions to substantially retain their original impact strength after exposure to elevated temperatures for an extended period of time. In fact, the blend compositions of the invention have been shown to retain at least 90 percent of their original impact strength after exposure to elevated temperatures. The example set forth below further demonstrates this feature.

In a preferred embodiment, the polymer blend compositions of the invention include from about 5 to about 95 weight percent of the polyamide resin, from about 5 to about 95 weight percent of the polyphenylene ether resin and from about 0.01 to about 10 weight percent of the thermal stabilizer compound. In a further preferred embodiment, the blend compositions contain from about 25 to about 75 weight percent of the polyamide resin,

from about 25 to about 75 weight percent of the polyphenylene ether resin and from about 0.1 to about 5 weight percent, preferably from about 0.1 to about 1.5 weight percent of the thermal stabilizer compound.

The blend compositions of the invention preferably further comprise a compatibilizing agent which is present in an amount sufficient to effect compatibilization of the polyphenylene ether resin and the polyamide resin. Various compatibilizing agents are known in the art and may be added directly to the blend compositions or may be added to and/or reacted with one of the resin components of the blend prior to formation of the blend compositions.

Suitable compatibilizing agents include, but are not limited to, liquid diene polymers, epoxy compounds and quinone compounds as disclosed in the Ueno et al U.S. Patent No. 4,315,086, copolymers of the vinyl aromatic compound and an $\alpha,\beta$ -unsaturated carboxylic acid, anhydride, amide or imide as disclosed in the Kasahara U.S. Patent No. 4,339,376, compounds having both (a) an ethylenic carbon-carbon double or triple bond or an acid halide and (b) a carboxylic acid anhydride, di-acid dianhydride, acid amide, imido, carboxylic acid ester, amino, hydroxyl, halo, acid, halide or epoxy group as disclosed in the Aycock U.S. Patent No. 4,600,741, and aliphatic polycarboxylic acids and derivatives of the formula $(R^1O)_mR(COOR^2)_n(CONR^3R^4)_s$ wherein R is a linear or branched chain, saturated aliphatic hydrocarbon of from 2 to 20 carbon atoms, $R^1$ is selected from the group consisting of hydrogen or an alkyl, aryl, acyl or carbonyl dioxy group of 1 to 10 carbon atoms, each $R^2$ is independently selected from the group consisting of hydrogen or an alkyl or aryl group of from 1 to 20 carbon atoms, each $R^3$ and $R^4$ is independently selected from the group consisting essentially of hydrogen or an alkyl or aryl group of from 1 to 10 carbon atoms, m is equal to 1 and $(n + s)$ is greater than or equal to 2, and n and s are each greater than or equal to zero and wherein $(OR^1)$ is alpha or beta to a carbonyl group and at least two carbonyl groups are separated by 2 to 6 carbon atoms, as disclosed in WO 8505372. Suitable compatibilizing agents also comprise styrene-maleic anhydride grafts on polyphenylene ether as disclosed in Japanese application No. 59-86653.

The compatibilizing agent may be mixed with, reacted with or grafted to the polyphenylene ether resin prior to addition of the polyamide. The compatibilizing agent containing blend may optionally include a radical initiator as is known in the art.

Additionally, the blend compositions according to the present invention may further include one or more impact modifiers known in the art. Preferred impact modifiers comprise rubbery high molecular weight polymers. Rubbery high molecular weight polymers may comprise natural and/or synthetic polymeric materials. More particularly, the rubbery high molecular weight polymer materials may comprise natural rubber, thermoplastic elastomers, homopolymers and copolymers, including random, block and graft copolymers which are well-known in the art. Specific examples of the rubbery high molecular weight polymer materials include, but are not limited to, natural rubber, butadiene polymers, rubber styrene copolymers, butadiene/styrene copolymers, isoprene polymers, chlorobutadiene polymers, butadiene/acrylonitrile copolymers, isobutylene polymers, isobutylene/butadiene copolymers, isobutylene/isoprene copolymers, acrylic ester polymers, ethylene propylene copolymers, ethylene/propylene/diene copolymers, thiokol rubber, polysulfide rubber, polyurethane rubber, and epichlorohydric rubber. Additionally, any of the aforementioned rubbery materials may be modified with an acid or anhydride as is known in the art for use in the blend compositions of the present invention.

Preferred impact modifiers comprise AB and ABA type block copolymers comprising monoalkenyl arene blocks and hydrogenated, partially hydrogenated, and non-hydrogenated conjugated diene blocks. Examples of suitable block copolymers are polystyrene-polybutadiene, polystyrene-polyisoprene, polystyrene-polybutadiene-polystyrene, polystyrene-polyisoprene-polystyrene, poly(alpha-methylstyrene)-polybutadiene, poly(alpha-methylstyrene)-polyisoprene, poly(alpha-methylstyrene)-polybutadiene-poly(alpha-methylstyrene), and poly(alpha-methylstyrene)-polyisoprene-poly(alpha-methylstyrene).

The impact modifier may be included in the thermoplastic blend compositions according to the present invention in an amount of from about 1 to about 50 weight percent and, preferably in an amount of from about 5 to about 25 weight percent.

The blend compositions of the invention may further include one or more additional resin components, and, if necessary, compatibilizing agents for the additional resin components. A particularly preferred composition includes, in combination with the polyphenylene ether, the polyamide and the thermal stabilizer compound, at least one polystyrene component. The polystyrene component may comprise a rigid polystyrene, an impact modified polystyrene (several of which are known in the art), or mixtures thereof. Preferably, the polystyrene component is included in amounts up to about 90 percent by weight of the polyphenylene ether component.

In addition, the thermoplastic blend compositions according to the present invention may further include reinforcing additives, flame retardants, colorants, and the like which are well-known in the art.

The blend compositions of the invention may be prepared by either preblending the stabilizing compound with either resin component or by first blending the resin components and subsequently adding the stabilizing compound. Preferably, a compatibilizing agent is preblended with at least a portion of one of the resin components, for example, the polyphenylene ether components, prior to blending of the polyphenylene ether with the polyamide. Owing to the thermal stability of the blend composition, the compositions may advantageously be extruded at elevated temperatures, for example, in the range of about 270 to 350°C. Remaining ingredients such as impact modifiers, reinforcing additives, flame retardants, colorants and the like set forth above may be directly added to the blend compositions or to one of the polyphenylene ether and polyamide resins prior to blending with the other.

The following example demonstrates the improvements provided to the blend compositions of the invention.

EXAMPLE

Polymer blend compositions A, B and C were prepared including a polyphenylene ether resin modified with 1 percent of a compatibilizing agent comprising maleic anhydride, a polyamide resin comprising nylon 6,6 and an impact modifier comprising a styrene-butadiene block copolymer. Blend composition A also include a thermal stabilizer comprising 2-mercaptobenzothiazole and blend composition B included a thermal stabilizer comprising 2-mercaptobenzimidazole. Blend composition C did not include a thermal stabilizer. The parts by weight of each component included in the blend compositions are set forth in the Table. Blend compositions A, B and C were compounded on a 28 mm co-rotating twin screw extruder, pelletized and injection molded into test specimens. Molded specimens of each blend composition were subjected to impact measurements using a Dynatup Drop Weight Instrumented Impact Tester via ASTM D3763-85. Molded specimens of each blend composition were also exposed to an elevated temperature of 350° F for approximately four hours, after which a similar impact measurement was made. The result for each aged sample was compared to the results for the corresponding unaged sample and the percent retention of impact was calculated, the results of which are set forth in the Table.

TABLE

| | A | B | C |
|---|---|---|---|
| Polyphenylene ether (parts by weight) | 45 | 45 | 45 |
| Polyamide (parts by weight) | 45 | 45 | 45 |
| Stabilizer (parts by weight) | 0.50 | 0.50 | -- |
| Impact Modifier (parts by weight) | 10 | 10 | 10 |
| Percent Retention of Dynatup Impact | 92.8 | 95.7 | 62.5 |

The results set forth in the Table demonstrate that the blend compositions A and B according to the present invention including the stabilizer compound exhibited improved thermal stability as compared with blend composition C which did not include a stabilizer compound. More particularly, while blends A and B retained greater than 90 percent of their original Dynatup impact after exposure to elevated temperatures, blend composition C exhibited a significantly reduced Dynatup impact after similar exposure.

The preceding example is set forth to illustrate a specific embodiment of the invention and is not intended to limit the scope of the compositions of the invention. Additional embodiments and advantages within the scope of the claimed invention will be apparent to one of ordinary skill in the art.

## Claims

1. A polymer blend composition, comprising
   (a) a polyamide resin,
   (b) a polyphenylene ether resin, and
   (c) at least one thermal stabilizer compound of the formula

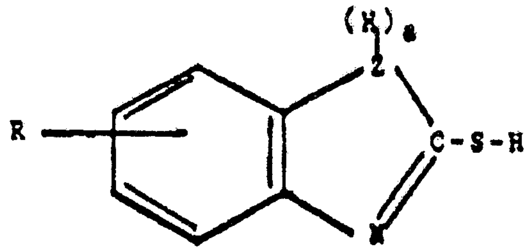

(I)

where Z is selected from nitrogen, sulfur and oxygen, a is a whole number equal to 0 or 1, and R is selected from hydrogen, methyl and ethyl groups, and salts thereof, included in an amount sufficient to thermally stabilize the blend composition.

2. A polymer blend composition as defined by claim 1, wherein the thermal stabilizer compound is included in an amount sufficient to cause the blend composition to substantially retain its original impact strength after exposure to elevated temperatures for an extended period of time.

3. A polymer blend composition as defined by claim 2, wherein the thermal stabilizer compound is included in an amount sufficient to cause the blend composition to retain at least 90 percent of its original impact strength after exposure to elevated temperatures for an extended period of time.

4. A polymer blend composition as defined by claim 1, comprising

(a) about 5 to about 95 weight percent of the polyamide resin,

(b) about 5 to about 95 weight percent of the polyphenylene ether resin, and

(c) about 0.01 to about 10 weight percent of the thermal stabilizer compound.

5. A polymer blend composition as defined by claim 4, comprising

(a) about 25 to about 75 weight percent of the polyamide resin,

(b) from about 25 to about 75 weight percent of the polyphenylene ether resin, and

(c) from about 0.1 to about 5 weight percent of the thermal stabilizer compound.

6. A polymer blend composition as defined by claim 4, comprising

(a) about 25 to about 75 weight percent of the polyamide resin,

(b) from about 25 to about 75 weight percent of the polyphenylene ether resin, and

(c) from about 0.1 to about 1.5 weight percent of the thermal stabilizer compound.

7. A polymer blend composition as defined by claim 1, further including a compatibilizing agent in an amount sufficient to effect compatibility between the polyamide resin and polyphenylene ether.

8. A polymer blend composition as defined by claim 7, wherein the compatibilizing agent is selected from the group consisting of

(a) liquid diene polymers, epoxy compounds and quinone compounds,

(b) copolymers of a vinyl aromatic compound and an $\alpha,\beta$ -unsaturated carboxylic acid, anhydride, amide or imide,

(c) compounds having both (i) an ethylenic carbon-carbon double or triple bond or an acid halide and (ii) a carboxylic acid, anhydride, di-acid dianhydride, acid amide, imido, carboxylic acid ester, amino, hydroxyl, halo, acid, halide or epoxy group,

(d) aliphatic polycarboxylic acids and derivatives of the formula $(R^1O)_mR(COOR^2)_n(CONR^3R^4)_s$ wherein R is a linear or branched chain, saturated aliphatic hydrocarbon of from 2 to 20 carbon atoms, $R^1$ is selected from the group consisting of hydrogen or an alkyl, aryl, acyl or carbonyl dioxy group of 1 to 10 carbon atoms, each $R^2$ is independently selected from the group consisting of hydrogen or an alkyl or aryl group of from 1 to 20 carbon atoms, each $R^3$ and $R^4$ is independently selected from the group consisting essentially of hydrogen or an alkyl or aryl group of from 1 to 10 carbon atoms, m is equal to 1 and $(n+ s)$ is greater than or equal to 2, and n and s are each greater than or equal to zero and wherein $(OR^1)$ is alpha or beta to the carbonyl group and at least two carbonyl groups are separated by 2 to 6 carbon atoms, and

(e) styrene-maleic anhydride grafts on polyphenylene ether.

9. A polymer blend composition as defined by claim 8, further including a radical initiator.

10. A polymer blend composition as defined by claim 8, wherein the compatibilizing agent is mixed with, reacted with a grafted to the polyphenylene ether prior to addition of the polyamide.

11. A polymer blend composition as defined by claim 1, further including an impact modifier.

12. A polymer blend composition as defined by claim 11, wherein the impact modifier comprises a rubbery high molecular weight polymer.

13. A polymer blend composition as defined by claim 11, wherein the impact modifier is included in an amount of from about 1 to about 50 weight percent.

14. A polymer blend composition as defined by claim 11, wherein the impact modifer comprises an AB or ABA block copolymer containing monoalkenyl arene blocks and hydrogenated, partially hydrogenated or non-hydrogenated conjugated diene blocks.

15. A polymer blend composition as defined by claim 14, wherein the impact modifier comprises a block

copolymer select from the group consisting of polystyrene-polybutadiene, polystyrene-polyisoprene, polystyrene-polybutadiene-polystyrene, polystyrene-polyisoprene- polystyrene, poly(alpha-methylstyrene)- polybutadiene, poly(alpha-methylstyrene)-polyisoprene, poly(alpha-methylstyrene)-polybutadiene-poly(alpha-methylstyrene), and poly(alpha-methylstyrene)-polyisoprene-poly(alpha-methylstyrene).

16. A polymer blend composition as defined by claim 1, further including a polystyrene component selected from rigid polystyrenes, impact modified polystyrenes and mixtures thereof.

17. A polymer blend composition as defined by claim 16, wherein the polystyrene component is included in an amount up to about 90 percent by weight of the polyphenylene ether resin.

18. A polymer blend composition comprising a polyamide resin, a polyphenylene ether resin, and 2-mercaptobenzothiazole in an amount sufficient to thermally stabilize the blend composition.

19. A polymer blend composition comprising a polyamide resin, a polyphenylene ether resin, and 2-mercaptobenzimidazole in an amount sufficient to thermally stabilize the blend composition.

European Patent Office

# EUROPEAN SEARCH REPORT

Application Number

EP 89 40 0431

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 630 421 (G. STAMATOFF)<br>* Claim 1 *<br>--- | 1-19 | C 08 K 5/37<br>C 08 K 5/47<br>C 08 L 71/04<br>C 08 L 77/00 //<br>(C 08 L 71/04<br>C 08 L 77:00 )<br>(C 08 L 77/00<br>C 08 L 71:04 ) |
| Y,D | US-A-3 379 875 (K. HOLOCH)<br>* Claims *<br>--- | 1-19 | |
| Y,D | US-A-3 379 792 (R. FINHOLT)<br>* Claim 1 *<br>--- | 1-6,18-19 | |
| Y,D | US-A-4 315 086 (K. UENO et al.)<br>* Claims *<br>----- | 7-19 | |

TECHNICAL FIELDS SEARCHED (Int. Cl.4)

C 08 K
C 08 L

The present search report has been drawn up for all claims

| Place of search | Date of completion of the search | Examiner |
|---|---|---|
| THE HAGUE | 24-05-1989 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)